**Europäisches Patentamt**

**European Patent Office**

**Office européen des brevets**

(11) Numéro de publication : **0 306 394 B1**

(12) **FASCICULE DE BREVET EUROPEEN**

(45) Date de publication du fascicule du brevet :
**15.04.92 Bulletin 92/16**

(21) Numéro de dépôt : **88402169.2**

(22) Date de dépôt : **26.08.88**

(51) Int. Cl.⁵ : $B65B\ 3/04$, $A01J\ 25/13$

(54) **Procédé de moulage d'unités d'une matière moulable ; procédé de préparation de telles unités ; unités obtenues par la mise en oeuvre de ces procédés ; moule individuel et moule composé; et paquets, comprenant de telles unités et de tels moules.**

(30) Priorité : **27.08.87 FR 8711972**

(43) Date de publication de la demande :
**08.03.89 Bulletin 89/10**

(45) Mention de la délivrance du brevet :
**15.04.92 Bulletin 92/16**

(84) Etats contractants désignés :
**AT BE CH DE ES FR GB GR IT LI LU NL SE**

(56) Documents cités :
**FR-A- 1 345 840**
**FR-A- 2 528 663**
**FR-A- 2 537 594**

(73) Titulaire : **BONGRAIN S.A.**
**Le Moulin-à-Vent**
**F-78280 Guyancourt (FR)**

(72) Inventeur : **Chauvin,Bernard Louis**
**Les Muscardières, Le Vieil Baugé**
**F-49150 Baugé (FR)**

(74) Mandataire : **Derambure, Christian**
**Cabinet Bouju Derambure (Bugnion) S.A. 55, rue Boissonade**
**F-75014 Paris (FR)**

EP 0 306 394 B1

Jouve, 18, rue Saint-Denis, 75001 PARIS

## Description

L'invention concerne un procédé de moulage d'une pluralité d'unités d'une matière moulable ; un procédé de préparation de telles unités ; des unités obtenues par la mise en oeuvre de ces procédés ; un moule composé ; et un paquet comprenant de telles unités et de tels moules.

L'invention est plus particulièrement mais non exclusivement destinée à être appliquée à un produit alimentaire, en particulier une spécialité fromagère et/ou charcutière et/ou chocolatière et/ou "confisière" (de confiserie).

On connaît bien, en particulier dans l'industrie alimentaire, l'usage de moules d'une part, et la réalisation soit d'unités de matière à consistance au-moins sensiblement solide (cela comprenant aussi la consistance d'un fromage fondu par exemple), soit de paquets de telles unités (comprenant aussi un emballage), d'autre part.

Par exemple et non limitativement, un bloc de fromage fondu est obtenu par moulage dans un moule ou directement dans un emballage préalablement formé. Des fromages frais sont moulés en faisselles. Le beurre est également moulé. On connaît aussi, pour le fromage notamment, l'emploi de multimoules. Le document US 3 857 330 décrit un moule destiné à une saucisse, comprenant deux parties séparables et associables -à savoir un fond et un couvercle- chacune comprenant une alvéole, ces deux alvéoles d'une part définissant, par la coopération de ces deux parties, une enceinte de moulage dont l'espace interne peut être rempli d'une matière moulable et, d'autre part, autorisant, après prise en masse et lorsque souhaité, le démoulage de l'unité de matière moulable ainsi moulée. Dans ce document US 3 857 330, la matière est injectée dans le moule, dont les deux parties sont associées l'une à l'autre, par une ouverture prévue à cet effet. Dans le document EP 183 601, on décrit également un moule en deux parties pour une matière déformable dosée par ailleurs pour remplir le moule et introduite moule ouvert. Le document FR 1 339 674 décrit un moule destiné à un corps creux en chocolat, ce moule étant agité pour assurer une répartition convenable de la matière moulable introduite à l'intérieur, sur une surface interne et, simultanément la prise en masse. D'autres formes de réalisation de moules et d'autres procédés de moulage pour leur mise en oeuvre sont également connus (voir documents FR 1 212 388 et FR 2 537 594 notamment). Le document FR 1 345 840 décrit un procédé et un dispositif pour la fabrication de fromages. Selon ce procédé on verse le caillé dans une forme, une toile étant interposée entre cette dernière et le caillé tandis qu'une bague coulissante est prévue dans la forme, entre cette dernière et la face extérieure de la toile, à la partie supérieure du caillé, cette bague coopérant avec le couvercle et s'ajustant dans la forme, de sorte que, lors du pressage, le couvercle presse le caillé et la bague l'un contre l'autre, la toile sortant entre la bague coulissante et le couvercle. Selon le document FR 1 345 840, le moule utilisé est purement fonctionnel pour le moulage. Il ne participe pas au dosage de la matière à mouler pas plus qu'à son emballage ultérieur. Ce document ne suggère pas, davantage, le moulage d'une pluralité d'unités simultanément. En ce qui concerne le moule proprement dit, ses deux parties ne sont pas agencées de façon étanche l'une par rapport à l'autre que ce soit dans leur position intermédiaire où ils sont l'un dans l'autre mais non encore à leur position définitive de moulage ou dans cette position de moulage. En effet, il est prévu, entre les deux parties du moule deux toiles et une bague cette dernière montée coulissante de sorte que la position relative des deux parties du moule en position de moulage est incertaine, aléatoire, peu précise. Cette caractéristique du document FR 1 345 840 peut s'expliquer par le fait qu'il est sans doute admis, par hypothèse de départ, que la masse de fromage finalement obtenue est relativement incertaine, de l'humidité étant évacuée par de petites et nombreuses ouvertures du fond et du couverrle, celles-ci n'étant pas prévues, cependant pour le passage de matière à mouler, telle quelle, en vue de son dosage pas plus que le passage d'air lors de la coopération des deux parties du moule. Enfin, on peut penser que le démoulage du fromage moulé est particulièrement hasardeux, du fait de la présence de la bague coulissante qui doit être préalablement enlevée, alors même que son accès est pratiquement impossible. D'une façon générale, selon cet état connu de la technique on introduit, dans le moule, une quantité appropriée de matière, la détermination de cette quantité étant réalisée par ailleurs, indépendamment du moule, individuellement pour chaque moule, ce qui est, à l'évidence, peu commode. Par ailleurs, généralement, on démoule l'unité de matière après prise en masse. Parfois, rarement le moule fait aussi fonction d'emballage et est "perdu" pour la fabrication (voir document FR 2 357 594).

On connaît également (document FR 2 528 663) un procédé et une machine de conditionnement de fromage dans lesquels le fromage est moulé puis partiellement démoulé pour être ensuite transféré dans des récipients destinés au stockage, transport, présentation à la vente.

On connaît, par ailleurs, un procédé et un dispositif de remplissage de micro-bassines de même volume, pour la fabrication de fromage à pâte molle (document FR 2 186 953), dans lesquels on remplit, à un niveau déterminé un récipient commun surmontant un ensemble de plusieurs micro-bassines et on fractionne ensuite le lait contenu dans ce récipient pour constituer des volumes de lait égaux entre eux, lesquels sont ensuite transférés aux micro-bassines. Toutefois, cette technologie de dosage est considérée indépendamment de tout moulage de la matière traitée.

On connaît enfin (document FR 2 537 594) un procédé de fabrication d'une bougie dans une coque en cire dure consomptible.

Le but de l'invention est donc un procédé et un dispositif (moule composé) qui permettent la réalisation industrielle et dans des conditions économiques satisfaisantes d'unités dosées et moulées d'une matière moulable.

Un autre but de l'invention est de permettre d'intégrer ensemble le dosage, le moulage, l'emballage.

A cet effet l'invention propose d'abord un procédé de moulage d'une pluralité d'unités d'une matière moulable M, telle qu'une spécialité fromagère, charcutière, chocolatière, confisière, au moyen d'un moule composé comprenant une même pluralité de moules individuels en deux parties séparables et associables, chacune comprenant une alvéole ; on introduit la totalité d'une quantité multiple QM de matière M, correspondant à la pluralité d'unités à mouler d'une part, dans la pluralité d'alvéoles de la première partie du moule composé et, d'autre part, dans un prolongement d'ouverture collectif commun à la pluralité d'alvéoles de la première partie ayant également pour fonction d'assurer l'égalisation de la quantité de matière M entre les différents moules individuels ; on fait coopérer les deux parties du moule composé l'une avec l'autre, de façon égale pour les différents moules individuels ; et on assure une étanchéité suffisante entre les alvéoles de la seconde partie du moule composé et le prolongement d'ouverture collectif de la première partie, propre d'une part à éviter un passage substantiel de matière M entre eux, et, d'autre part, à autoriser le passage de matière M d'un moule individuel au moule individuel voisin jusqu'à rapprochement des alvéoles des premières et secondes parties individuelles, le moulage des unités étant réalisé simultanément.

L'invention propose ensuite un moule composé pour la mise en oeuvre du procédé comprenant d'une part une pluralité de moules individuels en deux parties séparables et associables chacune comprenant une alvéole ces deux alvéoles définissant par leur coopération une enceinte de moulage dont l'espace interne peut être rempli, au moins partiellement, d'une matière moulable M, les première et seconde parties respectivement étant associées rigidement entre elles et, d'autre part, un prolongement d'ouverture collectif commun à la pluralité d'alvéoles de la première partie du moule composé.

Selon l'invention, le moule assure par lui-même la conformation de la matière M et cela y compris pour une matière originellement plus ou moins pâteuse, sans nécessiter un appareillage distinct remplissant cette fonction (tel que l'appareillage décrit dans le document US 3 857 330 et FR 2 528 663). De plus, cette conformation est possible avec un espace interne du moule de forme complexe ou tourmentée ou comportant des coins ou zones peu accessibles. Par ailleurs, le moule peut également participer, de façon positive et essentielle au dosage et avoir ainsi une fonction dosage combinée aux fonctions moulage et conformation. Cette fonction dosage est appliquée dans le cas d'un moule composé. Enfin, et supplémentairement ou alternativement, le moule composé peut remplir une fonction emballage.

Les autres caractéristiques et avantages de l'invention résulteront de la description qui suivra en référence aux dessins annexés dans lesquels :

Les figures 1A à 1E sont cinq vues schématiques en coupe par un plan axial vertical illustrant des étapes d'un procédé de moulage avec un moule individuel, le moule composé selon l'invention comprenant une pluralité de moules individuels.

La figure 2 est une vue en coupe par un plan axial vertical, à plus grande échelle, illustrant un moule individuel, élément constitutif du moule composé selon l'invention.

La figure 3 est une vue en coupe par plan horizontal et transversal selon la ligne III-III de la figure 2.

La figure 4 est une vue schématique, partielle, à plus grande échelle, d'un détail du moule, illustrant l'étanchéité avec écoulement entre les deux parties du moule.

Les figures 5A à 5G sont sept vues schématiques en coupe par un plan axial vertical et sept variantes possibles et indicatives de moules.

La figure 6 est une vue schématique en coupe par un plan axial vertical à plus grande échelle du moule composé selon l'invention.

Les figures 7A et 7B sont deux vues schématiques en coupe par un plan axial vertical illustrant des étapes du procédé de moulage selon l'invention.

La figure 8 est une vue schématique, en perspective, partielle arrachée, d'une forme en réalisation possible du moule composé selon l'invention.

L'invention concerne un procédé de moulage d'une pluralité d'unités 1 d'une matière moulable dans un moule composé 2B ; de telles unités 1 ainsi moulées par la mise en oeuvre de ces procédés ; un procédé de préparation de telles unités 1 ; le moule composé 2B ; un paquet 3 constitué d'unités 1 et de moules 2B.

L'invention s'applique à une matière moulable M, c'est à dire une matière qui présente comme caractéristique de pouvoir se trouver soit dans un premier état où elle présente une certaine fluidité allant du liquide au pâteux et donc où elle est déformable , soit par elle-même, soit sous l'effet de contraintes extérieures ; soit dans un second état, où elle présente une certaine solidité allant du rigide ou du gel au pâteux (tel que l'état d'un fromage fondu prêt à la consommation) et donc où elle présente une certaine tenue. Par convention, et sans que cela limite la portée de l'invention, ces deux états sont désignés par la suite respectivement comme état fluide et état solide. Généralement, la matière M est dans sa situation finale d'utilisation (telle que pour la vente, la présentation, la consommation) à l'état solide. La matière M est amenée à l'état fluide soit du fait même de son procédé de fabrication (fromage fondu par exemple), soit par une action spécifique (tel que le chauffage). Le passage de l'état fluide à l'état solide (désigné conventionnellement par la suite par l'expression "prise en masse") est assuré par un traitement mécanique (immobilité par exemple) et/ou thermique (refroidissement par exemple) et/ou chimique (présence d'un gélifiant par exemple) et/ou biologique (présence d'un micro organisme par exemple). L'invention est plus spécialement destinée au cas d'une matière M qui passe de l'état fluide à l'état pâteux sans perte de matière ou d'un composant de celle-ci, comme c'est le cas de fromages réalisés par égouttage d'un caillé et donc avec perte d'eau substantielle entre l'état fluide et l'état solide. La matière M peut être, plus particulièrement, mais non exclusivement, un produit alimentaire en particulier une spécialité fromagère (plus généralement laitière et incluant donc un fromage) et/ou charcutière et/ou chocolatière et/ou "confisière". La matière M est homogène ou hétérogène, notamment comprenant des morceaux plutôt solides, de la même matière M ou d'une autre matière. Le cas échéant, les deux états fluide et solide sont voisins, voire identiques, la prise en masse ne désignant dans ce cas que le changement, purement formel, d'état, c'est-à-dire leur situation dans le temps. Enfin, la matière M, une fois constituée en unité 1 peut être homogène, en tout ou partie, ou, au contraire hétérogène, relativement à sa composition, sa consistance, ou autre (cela incluant donc la présence de morceaux plutôt solide, ou la réalisation de mélanges -tel qu'un marbré- ou encore la réalisation d'une coque externe plutôt à l'état solide et d'un noyau interne plutôt à l'état fluide). La matière M, ses deux états fluide et solide et le passage de l'état fluide à l'état solide ne font pas en soi et pris isolément l'objet de l'invention. Ils ne sont pas décrits davantage. Un exemple typique illustratif de l'invention est celui où la matière M est ou est à base de fromage fondu.

L'invention met en oeuvre un moule composé 2B dérivé d'un moule individuel 2A et comportant la plupart de ses caractéristiques. Pour cette raison, on emploie, par la suite l'expression moule 2 pour désigner, sans distinction, un moule individuel 2A ou composé 2B et donc leurs caractéristiques communes. De plus, les mêmes parties d'un moule individuel 2A ou composé 2B portent les mêmes références.

Une application particulière, purement indicative et non limitative de l'invention, est la réalisation de parts individuelles de produit alimentaire, présentées groupées en plaque ou plaquette, ces parts allant de quelques grammes à plusieurs dizaines de grammes, ayant une forme cubique ou autre, les produits alimentaires étant à base de fromage notamment fondu, de viande, de chocolat, etc ... Les parts étant présentées emballées.

L'invention met en oeuvre un moule 2 qui a, de façon connue en soi, deux parties 4, 5 séparables et associables, telles qu'un fond et un couvercle, ces deux parties 4,5 comprenant deux alvéoles 6,7 respectivement, ou équivalent, définissant, par la coopération des deux parties 4,5 une enceinte de moulage 8. L'espace interne de cette enceinte de moulage 8 peut être rempli, au moins partiellement, de la matière moulable M. Elle permet la prise en masse jusqu'à l'état solide et elle autorise, après prise en masse, et lorsque souhaité, le démoulage, par dissociation des deux parties 4,5. Un tel moule 2 est réalisé en un matériau, avec la structure et les autres caractéristiques (état de surface interne etc) aptes à lui permettre de remplir ces fonctions et les autres fonctions de conformation, dosage et emballage décrites plus en détail par la suite. Par exemple, le moule 2 peut être réalisé en un matériau en couche présentant une certaine tenue mécanique (pour la fonction conformation), ce matériau pouvant notamment une matière plastique moulée ou injectée. En variante, le moule 2 est réalisé en un matériau présentant, en combinaison, cette tenue et la caractéristique d'être consommable (tel que, par exemple, une coque en chocolat) et préparé par ailleurs séparément.

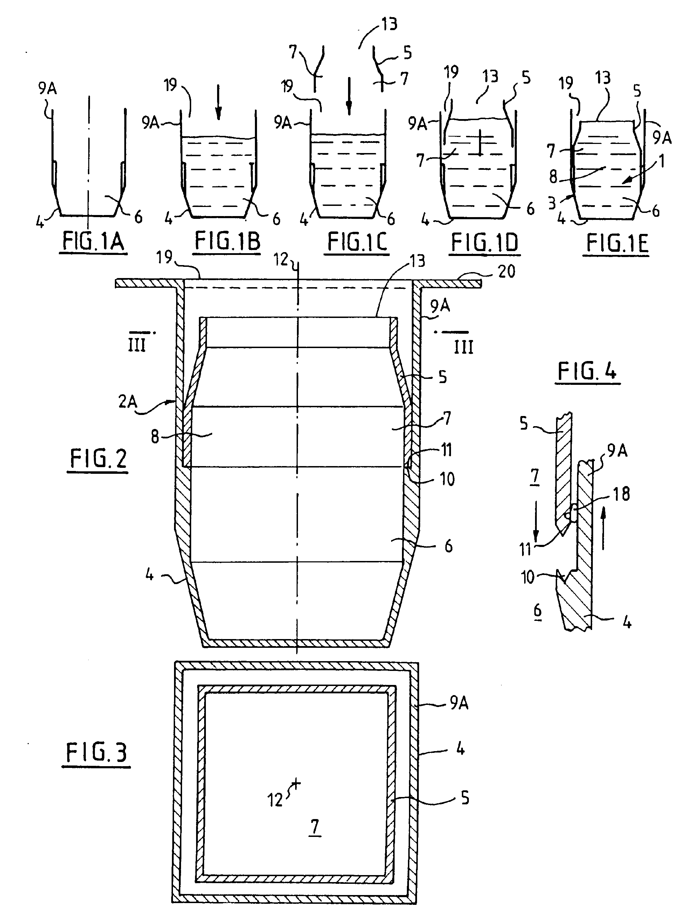

Un tel moule 2 selon l'invention est dans l'un des états suivants : état associé (fig 1E) dans lequel les deux parties 4,5 coopèrent l'une avec l'autre pour la constitution de l'enceinte de moulage 8 ; état dissocié (fig 1 C) dans lequel les deux parties 4,5 sont séparées et disjointes l'une de l'autre ; état intermédiaire (fig 1 D) dans lequel les deux parties 4,5 sont unies et jointes mais sans que l'enceinte de moulage 8 ne soit parfaitement totalement et définitivement formée, les alvéoles 6,7 étant écartées l'une de l'autre. L'état intermédiaire correspond, normalement, à plusieurs (une infinité de) positions relatives possibles des deux parties 4,5.

Une première partie 4-notamment le fond- du moule individuel 2A comporte également un prolongement d'ouverture individuel 9A communiquant avec et prolongeant l'alvéole 6 de cette première partie 4 à partir de son bord 10, ce prolongement d'ouverture individuel 9A ayant pour fonction de coopérer avec l'alvéole 7 de la seconde partie 5, avec étanchéité suffisante, lors de leur déplacement relatif réciproque et pour effet de participer au déplacement à force de la matière M en vue de sa répartition convenable dans l'espace interne de l'enceinte de moulage 8 c'est-à-dire que même à l'état intermédiaire il y a étanchéité substantielle entre les parties 4 et 5.

Les autres caractéristiques des moules 2, 2A, 2B sont décrites plus en détail par ailleurs.

Le procédé de moulage d'une unité 1 de matière moulable M utilisant un tel moule individuel 2A est décrit pour faire correspondre le procédé de moulage d'une pluralité d'unités au moyen d'un moule composé 2B. Le procédé est tel que, de façon connue en soi prise isolément, on place d'abord dans le moule 2A une quantité individuelle QI de la matière M à l'état fluide et on assure ensuite la prise en masse de cette quantité individuelle QI de matière M, dans le moule individuel 2A à l'état associé.

On entend par quantité individuelle QI, la quantité de matière M nécessaire à la constitution de l'unité 1. En d'autres termes, la quantité QI de matière introduite au départ dans le moule 2 s'y retrouve à la fin, une fois prise en masse et utilisation, sans perte substantielle de matière ou d'un composant de celle-ci entre le départ et l'arrivée. L'invention étant un procédé à vocation industrielle, la quantité QI finalement obtenue doit l'être avec le degré de précision requis dans le domaine d'application considéré, ce même degré de précision s'appliquant donc à la même quantité QI introduite originellement.

Pour placer la quantité individuelle QI de matière M dans le moule individuel 2A, on part d'un moule individuel 2A à l'état dissocié ; on introduit ensuite la totalité de la quantité individuelle QI de matière M dans une première partie 4 du moule individuel - notamment le fond- et on fait coopérer enfin, les deux parties 4, 5 du moule individuel 2A l'une avec l'autre, jusqu'à l'état associé et en passant par l'état intermédiaire, ce qui a pour fonction de déplacer à force la matière M et d'assurer sa répartition convenable entre les deux parties 4, 5 du moule individuel 2A à savoir le remplissage total de l'alvéole 6 de la première partie 4 du moule et le remplissage, au-moins partiel, de l'alvéole 7 de la seconde partie 5 -notamment le couvercle.

Le passage du moule 2 à l'état intermédiaire (fig. 1D) permet d'assurer depuis l'état dissocié (fig. 1 C) jusqu'à l'état associé (fig. 1 E) une fonction de conformation de la matière M sans perte de celle-ci compte tenu de l'étanchéité entre les parties 4 et 5, c'est à dire que celle-ci est amenée à prendre la forme extérieure -en le remplissant- de l'espace interne de l'enceinte de moulage 8. Cette fonction de conformation est mise en oeuvre pour la totalité de la quantité individuelle QI. A cet effet et ainsi que cela découlera de la description ultérieure, l'enceinte de moulage, à l'état intermédiaire, est substantiellement dépourvue de niches ou reliefs internes qui auraient pour effet la constitution de masses de matière M localisées, indésirables, ne faisant pas partie de l'unité 1.

On introduit la totalité de la quantité individuelle QI de matière M d'abord dans l'alvéole 6 de la première partie 4 en la remplissant totalement et ensuite dans le prolongement d'ouverture individuel 9A de cette alvéole 6 en le remplissant au moins partiellement.

On fait coopérer les deux parties 4,5 du moule individuel 2A l'une avec l'autre à l'état intermédiaire et à partir de l'état dissocié en introduisant l'alvéole 7 de la seconde partie 5, par son bord d'ouverture 11, d'abord dans le prolongement d'ouverture individuel 9A de la première partie 4 et en rapprochant relativement l'une de l'autre les deux alvéoles 6,7 jusqu'à leur jonction étanche.

On assure un rapprochement des deux alvéoles 6,7 par un déplacement relatif de l'alvéole 7 de la seconde partie 5 dans et par rapport au prolongement d'ouverture individuel 9A de la première partie 4 ; et, pendant ce déplacement relatif, on assure d'une part une étanchéité suffisante entre l'alvéole 7 de la seconde partie 5 et le prolongement d'ouverture individuel 9A de la première partie 4 par contact direct entre eux, cette étanchéité étant propre à éviter un passage substantiel de matière M entre eux (figure 1D). Et, d'autre part, on évite la constitution de masses isolées de matière M, telles que celles qui résulteraient du remplissage de niches ou de l'existence de reliefs internes.

Tout se passe comme si, à l'état intermédiaire, le volume de l'espace interne formé par l'enceinte constituée par les deux alvéoles 6,7 et tout ou partie du prolongement 9A diminue progressivement jusqu'à la valeur correspondante à l'état associé du moule 2A, cette diminution de volume assurant la conformation requise de la matière M.

Le déplacement relatif est, dans le cas considéré, un coulissement le long d'un axe 12 qui est l'axe commun au moule individuel 2A et au prolongement d'ouverture individuel 9A. Il peut, si nécessaire lui être combiné un pivotement autour de cet axe.

L'étape de prise en masse doit être considérée en fonction de ce qui a été dit ci-dessus quant aux états fluide et solide de la matière M. Le cas échéant, on introduit une matière M hétérogène ou plusieurs matières M simultanément ou successivement. La prise en masse est totale ou partielle, homogène ou hétérogène (notamment limitée à la partie extérieure formant coque). Elle concerne, en général et préférentiellement, la totalité de la quantité QI sans nécessiter une perte de matière M ou d'un composant de celle-ci tel que cela est le cas avec un égouttage par exemple.

Selon une autre caractéristique du procédé, on assure une communication permanente entre l'intérieur du moule individuel 2A et l'atmosphère extérieure, au moins lors de l'étape de coopération des deux parties 4, 5 du moule individuel 2A ; et à l'état intermédiaire, éventuellement, pendant une partie initiale au moins de l'étape de prise en masse.

A cet effet, le moule individuel 2A comporte en outre une ouverture supérieure 13 ménagée dans l'alvéole 7 de la seconde partie 5 à l'opposé de son bord 11, cette ouverture supérieure 13 permettant le passage d'air et/ou de matière M et ayant pour fonction de permettre, si nécessaire, l'évacuation d'air et/ou de matière M excédentaire lors du procédé de moulage. A cet effet, préférentiellement et outre le fait que l'ouverture 13 soit située essentiellement dans la partie extrême supérieure de l'enceinte 8, elle est aussi assez large pour permettre cette évacuation d'air, de matière M. Dans le cas d'un moule composé 2B, l'évacuation de matière M participe au dosage de la matière M par répartition entre les moules individuels composant le moule collectif.

Ainsi que cela résulte de ce qui précède, l'ouverture supérieure 13 n'a pas pour fonction première d'assurer le remplissage du moule 2A avec la matière M. Plus particulièrement, la quantité individuelle QI est choisie de manière que la matière M vienne affleurer l'ouverture supérieure 13, l'excès éventuel de matière M étant évacué de l'enceinte 8 par cette ouverture 13. Dans ce cas, on définit la quantité individuelle QI de matière M comme étant la quantité de matière M propre à remplir totalement ou quasiment totalement le moule individuel 2A dont les deux parties 4,5 coopèrent. l'une avec l'autre avec jonction étanche et cela tant juste avant la prise en masse qu'à la fin de celle-ci.

On maintient le moule individuel 2A, dans son ensemble, substantiellement immobile -notamment avec son ouverture supérieure 13 exempte d'un mouvement substantiel autre que vertical ou horizontal au moins lorsque l'on fait coopérer les deux parties 4,5 du moule individuel 2A pour le remplissage et/ou la prise en masse. Par conséquent, on évite de vider inopinément la matière M par l'ouverture supérieure 13, notamment en inclinant le moule individuel 2A et ce, d'autant que l'ouverture 13 est, égénralement assez large, comme déjà indiqué, ainsi que cela est représenté sur la figure 2.

Selon une autre caractéristique du procédé, on fait remplir au moule individuel 2A une autre fonction relativement à la prise en masse, le moule individuel 2A participant à ou assurant celle-ci. Par exemple, le moule 2A peut être chauffé (étant alors conducteur de la chaleur ou au contraire refroidi).

Selon une autre caractéristique du procédé, une fois la matière M prise en masse, on peut maintenir l'unité 1 ainsi moulée et prise en masse dans le moule individuel 2A et, à cet effet, on fait remplir au même moule individuel 2A également une seconde fonction d'emballage.

Plus spécialement dans le cas où le moule individuel 2A remplit cette fonction d'emballage, on obture l'ouverture supérieure 13, au plus tard, au moins après la prise en masse ; et/ou au plus tôt après coopération avec jonction étanche de la première et de la seconde parties 4,5 du moule individuel 2A.

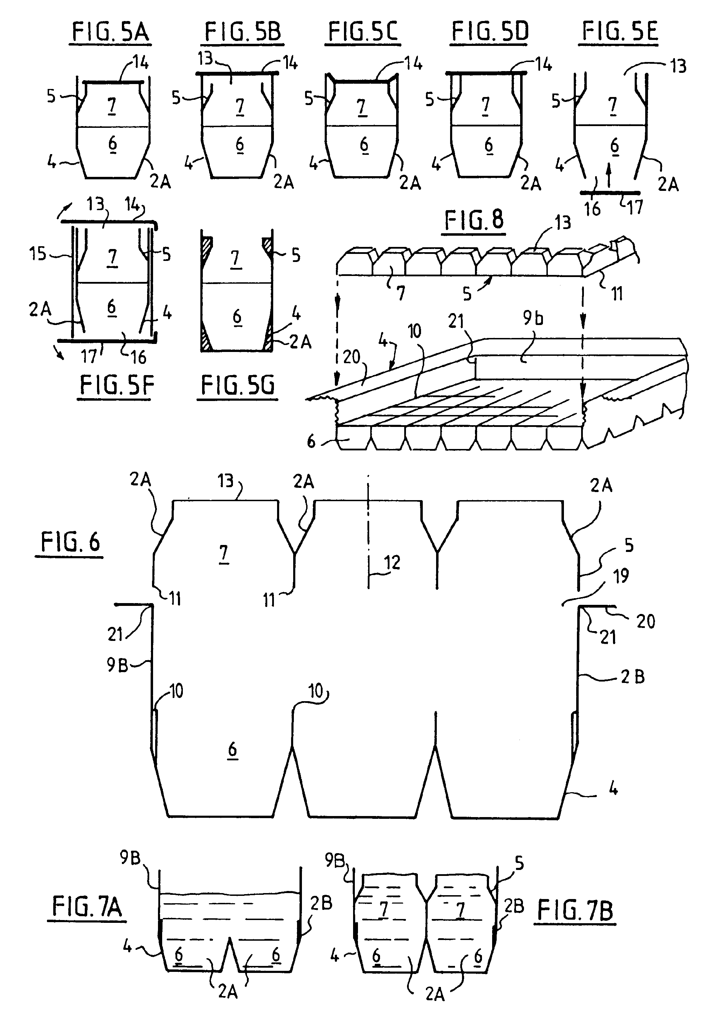

Par exemple on obture l'ouverture supérieure 13 par un opercule 14 associé au moule individuel 2A notamment de façon rigide et étanche.(figures 5A à 5D) ; et/on obture l'ouverture supérieure 13 au moyen d'un suremballage 15 fermé dans lequel on polace le moule individuel 2A. (fig. 5 F). Ces deux variantes sont employées alternativement ou en combinaison. Egalement, en variante l'ouverture 13 est obturée par une certaine quantité rapportée du même matériau constituant le moule 2A ou autre coulée dans l'ouverture 13 et venant se rigidifier. Cette obturation a pour fonction générale de protéger l'unité 1 et de contenir pour autant que nécessaire la matière M.

Selon une variante possible de réalisation, on prévoit également dans l'alvéole 6 de la première partie 4 au moins une ouverture inférieure 16 ; et on obture préalablement cette ouverture 16 par un opercule 17 associé au moule individuel 2A notamment de façon rigide et étanche et/ou au moyen d'un suremballage 15 notamment fermé dans lequel on place le moule individuel 2A au moins pendant le remplissage et la prise en masse (fig. 5 E et 5 F). Par conséquent, l'obturation de l'ouverture 16 lors du remplissage et la prise en masse prévient l'évacuation de matière M ou d'un composant de celle-ci (telle que l'eau) qui découlerait de l'existence d'une telle ouverture 16. En conséquence, on peut dire que pour le remplissage et la prise en masse, l'alvéole 6 est fermée en partie inférieure.

Selon une autre variante possible de réalisation, on associe l'une avec l'autre de façon rigide la première et la seconde parties 4,5 du moule individuel 2A notamment par soudage (ou brasage) et/ou au moyen d'un suremballage 15 au plus tard au moins après la prise en masse et/ou au plus tôt au moment de la coopération avec jonction étanche de la première et de la seconde parties 4,5 du moule individuel 2A.

Ainsi que cela découle aussi de la description qui suit ces différentes variantes (obturation de l'ouverture 13, obturation de l'ouverture 16, association rigide) s'appliquent isolément ou en combinaison deux à deux ou à trois.

Selon une autre variante possible, on dissocie le prolongement d'ouverture individuel 9A du reste du moule individuel 2A une fois la fonction du dit prolongement d'ouverture 9A terminéeet cela grâce à une possibilité de sectionnement de la première partie 4 du moule 2A en deux parties : l'alvéole 6 proprement dite et le prolongement 9A.

L'invention concerne un procédé de moulage d'une pluralité d'unités 1 par le procédé qui vient d'être décrit au moyen d'un moule composé 2B.

Un tel moule composé 2B est constitué d'une pluralité de moules individuels 2A dont les premières et secondes parties respectives 4,5 respectivement sont associées rigidement entre elles et qui, par ailleurs, comporte un prolongement d'ouverture collectif 9B commun à la pluralité d'alvéoles 6 de la première partie 4 de ce moule composé 2B.

Selon l'invention, ce procédé de moulage de la pluralité d'unités 1 est tel qu'on réalise ce moulage de cet,te pluralité d'unités simultanément au moyen de ce moule composé 2B.

Plus précisément, on introduit la totalité d'une quantité multiple QM de matière M, correspondant à la pluralité d'unités 1 à mouler, d'une part dans la pluralité ou une partie de la pluralité d'alvéoles 6 de la première partie 4 et, d'autre part, dans le prolongement d'ouverture commun 9B.

Le prolongement d'ouverture commun 9B a donc également pour fonction d'assurer l'égalisation de la quantité QM de matière M entre les différents moules individuels 2A, c'est à dire le dosage des quantités individuelles QI. Il est, à noter que cette fonction dosage est réalisée par le moule composé 2B directement sans appareillage distinct supplémentaire de dosage des quantités individuelles QI ou de versement des quantités individuelles QI dans chaque moule individuel 2A. Cette égalisation, grâce à l'ouverture 13 est rendue également possible par le fait qu'il n'y a, au dessus de celle-ci aucune cloison transversale verticale qui empêcherait le passage de matière M de l'un à l'autre des moules individuels 2A.

On fait coopérer les deux parties 4,5 du moule composé 2B l'une avec l'autre de façon égale pour les différents moules individuels 2A.

On assure une étanchéité suffisante entre les alvéoles 7 de la seconde partie 5 du moule composé 2B et le prolongement d'ouverture collectif 9B de la première partie 4, propre d'une part à éviter un passage substantiel de matière M entre eux, et d'autre part, à autoriser le passage de matière M d'un moule individuel 2A au moule individuel 2A voisin jusqu'à rapprochement avec jonction étanche des alvéoles 6,7 des première et seconde parties 4,5 individuelles. A défaut de ce passage possible de la matière M, la fonction de dosage ne serait pas remplie. Selon une variante possible, à l'état associé du moule composé 2B, on assure encore un passage, notamment faible et continu entre les moules individuels 2A, ce qui permet de réaliser une unité 1 s'apparentant à une tablette de chocolat c'est-à-dire comportant des carrés ou équivalent de chocolat reliés entre eux par le chocolat également mais en très faible épaisseur.

Selon une première variante, après coopération des deux parties 4,5 du moule composé 2B -notamment après prise en masse- on maintient l'intégrité de celui-ci.

Selon une seconde variante, après coopération des deux parties 4, 5 du moule composé 2B - notamment après prise en masse- on procède à une ou plusieurs sections du moule composé 2B en une pluralité de moules individuels 2A ou des ensembles d'un ou plusieurs groupes de moules 2A. En variante, c'est l'unité 1 qui est sécable.

En variante, on obture plusieurs ouvertures supérieures 13 et/ou inférieures 16 du moule composé 2B, respectivement par un opercule unique 14,17 et/ou au moyen d'un suremballage unique 15 (ou encore par un matériau solidifié ainsi que mentionné précédemment).

Egalement, en variante, on associe l'une avec l'autre de façon rigide la première et la seconde parties 4, 5 du moule composé 2B notamment par soudage ( ou brasage) et/ou au moyen d'un suremballage 15.

En particulier, on soude les deux parties 4,5 du moule composé 2B et/ou les deux parties 4,5 de chaque moule individuel 2A qui le compose.

Le cas échéant, on enlève le prolongement d'ouverture commun 9b une fois inutilisé.

Ces diverses variantes sont dérivées de celles déjà décrites pour le moule individuel 2A et, pour cette raison, n'ont pas à être décrites plus en détail.

Selon une première variante de réalisation, le procédé de moulage est mis en oeuvre de façon discontinue. Dans ce cas, le moule composé 2B est généralement réalisé sous la forme générale d'une plaque ou plaquette, (telle que notamment celle représentée sur la figure 8). Le procédé de moulage est mis en oeuvre pour la totalité des moules individuels 2A simultanément ou quasi simultanément c'est à dire pour la totalité de ces moules 2A : d'abord la dissociation, puis le remplissage, puis la coopération des deux parties 4,5 puis la prise en masse. Une fois les unités de ce moule composé 2B moulées, on utilise alors un autre moule composé 2B pour d'autres unités 1.

Selon une seconde variante de réalisation, le procédé de moulage est mis en oeuvre de façon continue. Dans ce cas, le moule composé 2B est généralement réalisé sous la forme générale d'une bande ou d'un ruban c'est à dire ayant une faible largeur par rapport à la longueur par ailleurs très grande en valeur absolue. Le procédé de moulage est mis en oeuvre pour un ou un sous groupe de moules individuels 2A puis pour un autre ou un autre sous groupe de moules individuels 2A et ainsi de suite. Par exemple, on remplit un premier sous groupe (ou ensemble de sous groupes) de moules individuels 2A, et simultanément on fait coopérer les deux parties 4,5 d'un deuxième sous groupe (ou ensemble de sous groupes) de moules individuels 2A en aval du deuxième, et ainsi de suite. Dans cette seconde variante, les deux parties 4,5 sont préférentiellement souples en sens longitudinal, par exemple, entre les moules individuels 2A, pour pouvoir être rapprochées, respectivement écartées.

Ainsi que cela résulte de la description qui précède, le procédé de moulage selon l'invention permet au moule 2 de jouer une fonction emballage. Dans ce cas, l'invention concerne aussi un procédé de préparation d'unités 1 de matière moulable M dans lequel on moule les unités 1 ainsi que cela a été indiqué et, ensuite, on manipule, stocke, présente à la vente et vend les unités 1 ainsi moulées dans leurs moules composés 2B. Les moules 2B sont les emballages finaux des unités ou des emballages primaires ou encore font partie intégrante des unités 1 par exemple sont consommables. Il existe ou non des suremballages tels que le suremballage 15.

On décrit maintenant plus en détail le moule individuel 2A pour faire comprendre le procédé de moulage d'une pluralité d'unités au moyen d'un moule composé 2B. Ce moule individuel 2A qui, pour sa fonction moulage et à part l'éventuel opercule de fermeture d'une ouverture telle que 16 comprend essentiellement les deux parties 4, 5 déjà mentionnées, à l'exception de bagues ou autre organe.

Le prolongement d'ouverture individuel 9A a une forme générale de tronçon de cylindre ou de prisme dont l'axe 12 est un axe de coulissement relatif des deux parties 4, 5 du moule individuel 2A et dont la courbe ou ligne de base est le bord 10 de l'alvéole 6 de la première partie 4. La forme de réalisation préférentielle est celle d'un prisme ou cylindre droit. Dans ce cas, l'axe 12 du prolongement d'ouverture individuel 9A est au moins sensiblement perpendiculaire au plan principal du bord 10 de l'alvéole 6 de la première partie 4. L'axe 12 est donc généralement vertical.

Le prolongement d'ouverture individuel 9A est essentiellement constitué par une paroi latérale venant prolonger celle de l'alvéole 6 de la première partie 4 en constituant ainsi un volume supplémentaire communiquant avec l'alvéole 6, volume suffisant pour contenir temporairement le volume de matière M devant remplir ultérieurement l'alvéole 7. Le prolongement d'ouverture individuel 9A comporte donc une ouverture d'introduction 19 égale à l'ouverture de l'alvéole 6 et ayant deux fonctions : permettre l'introduction initiale de la matière M dans la première partie ; permettre l'introduction ultérieure de la seconde partie 5 -plus précisément de son alvéole 7- dans le prolongement d'ouverture individuel 9A.

Ainsi que cela résulte de ce qui précède, les deux alvéoles 6, 7 sont agencées pour une jonction étanche, lorsque les deux parties 4, 5 du moule individuel 2A coopèrent l'une avec l'autre.En particulier, cette fonction étanche est obtenue par contact bord 10 contre bord 11, les deux parties 4, 5 étant maintenues l'une contre l'autre, notamment par suite du frottement direct de coopération de la seconde partie 5 dans la première partie 4, ce frottement assurant l'étanchéité ; ou encore par suite d'un serrage réciproque relatif des deux parties 4,5. Par exemple, il peut être prévu un jointd'étanchéité externe, latéral 18, attenant au bord 11 venant frotter sur la face interne du prolongement d'ouverture individuel 9A, ce qui assure l'étanchéité. Et, les chants des deux bords 10,11 peuvent être conformés à la manière d'un tenon et d'une mortaise pour constituer des portées venant en contact et assurant l'alignement des deux alvéoles 6,7 et l'étanchéité. De cette manière, les deux parois des deux alvéoles 6,7 attenantes à leurs deux bords 10,11, lorsque les deux parties 4,5 d moule individuel 2A coopèrent l'une avec l'autre, sont au moins sensiblement en prolongement réciproque.

Pr ailleurs, les deux alvéoles 6, 7 et, plus généralement la constitution des parties 4 et 5 est telle que le moule 2A, 2B peut être ouvert et permettre le démoulage des unités 1, sans difficulté et sans affecter celle-ci, y compris dans le cas où celles-ci sont devenues totalement rigides et donc dépourvues de toute élasticité. En conséquence, le moule 2A, 2B est dépourvu de tout relief interne susceptible d'empêcher le démoulage.

Préférentiellement, la longueur axiale du prolongement d'ouverture individuel 2A est au moins égale à l'encombrement axial de l'alvéole 7 de la seconde partie 5. Dès lors, à l'état associé du moule individuel 2A, la seconde partie 5 est logée dans le prolongement d'ouverture individuel 9A. Comme cas particulier, cette longueur et cet encombrement axial sont égaux ou voisins, l'ouverture 13 étant alors coplanaire ou sensiblement coplanaire de l'ouverture d'introduction 19 du prolongement d'ouverture indidivuel 9A, opposée à l'ouverture de l'alvéole 6 de la première partie 4.

Dans une forme de réalisation, le bord 10 de l'alvéole 6 de la première partie 4 est défini par une surépaisseur de la paroi de la première partie 4 du moule individuel 2A, séparant l'alvéole 6 du prolongement d'ouverture individuel 9A, cette surépaisseur autorisant néanmoins le démoulage sans préjudice.

Selon une variante possible, le moule individuel 2A comporte des moyens d'obturation 14,15 amovibles et/ou étanches de l'ouverture supérieure 13, passifs au moins lors du remplissage du moule individuel 2A. Ces moyens d'obturation sont constituées par un opercule 14 associé au moule individuel 2A notamment de façon rigide et étanche, et/ou par un suremballage 15 notamment fermé dans lequel est placé le moule individuel 2A. Egalement, en variante, ils sont constitués par un ajout de matériau obturant l'ouverture 13. Ces moyens d'obturation sont actifs par exemple lors de la prise en masse et/ou ultérieurement pour les manipulation, stockage, présentation à la vente, et vente, dans le cas d'un moule individuel 2A faisant également fonction d'emballage.

Selon une variante possible, le moule individuel 2A comporte une ouverture inférieure 16 ménagée dans l'alvéole 6 de la première partie 4 à l'opposé de son bord 10, cette ouverture inférieure 16 permettant le passage d'air et ayant pour fonction de permettre, si nécessaire, l'introduction d'air lors du démoulage de l'unité 1. Cette ouverture inférieure 16 peut être plus ou moins importante, occuper la totalité ou une partie seulement de la face d'extrêmité de fond, transversale, de l'alvéole 6. Dans cette variante, le moule comporte aussi des moyens d'obturation amovibles 17,15 et/ou étanches de l'ouverture inférieure 16, actifs au moins lors du remplissage du moule individuel 2A et la prise en masse de la matière M qu'il contient. Ces moyens d'obturation sont constitués par exemple par un opercule 17 associé au moule individuel 2A notamment de façon rigide et étanche et/ou un suremballage notamment fermé dans lequel est placé le moule individuel 2A. Egalement, en variante, ces moyens d'obturation sont constitués par un ajout de matériau obturant l'ouverture 16. Ces moyens d'obturation sont passifs par exemple lors du démoulage de l'unité 1.

Selon une variante possible, le moule individuel 2A comporte des moyens d'association rigide, notamment amovibles, de la première et de la seconde parties 4,5.Ces moyens d'association rigide sont constitués par des soudages (ou brasages) de deux zones en contact des deux parties 4,5 et/ou par un suremballage 15 notamment fermé dans lequel est placé le moule individuel 2A. Préférentiellement, dans cette variante, aux moyens d'association rigide sont associés des moyens de dissociation notamment ligne d'affaiblissement ou ruban de coupe et d'ouverture. De tels soudages et moyens de dissociation sont généralement connus en soi dans la technique ou l'emballage et, pour cette raison ne sont pas décrits davantage ici.

Les différentes variantes décrites et notamment celles avec moyens d'obturation de l'ouverture supérieure 13, avec une ouverture inférieure 16 et des moyens d'obturation de cette ouverture 16, avec des moyens d'association rigide et des moyens de dissociation sont soit alternatives, soit combinables deux à deux ou à trois. Dans ce cas, un même suremballage 15 remplit ou participe à au moins deux, éventuellement les trois fonctions d'obturation de l'ouverture supérieure 13, d'obturation de l'ouverture inférieure 16, d'association rigide. En variante, il est prévu plusieurs suremballages distincts pour chaque fonction ou sous-groupes de fonction.

Un tel suremballage 15 (figure 5 F) peut se présenter comme une boite ayant au moins un couvercle fixé de façon rigide mais amovible.

Ce couvercle fait alors en tout ou partie fonction d'opercule 14. Le suremballage 15 peut être, également, constitué de parois latérales avec deux couvercles tels que 14 et un couvercle inférieur qui fait en tout ou partie, fonction d'opercule 17 (cas de la figure 5 F). D'autres variantes de suremballage 15 sont envisageables selon les cas et pour autant que le moule individuel 2A remplit une fonction emballage, l'emballage constitué par les deux parties 4,5 est un emballage final ou intermédiaire auquel est combiné au moins un autre emballage ou suremballage.

De façon générale, les formes générales internes des alvéoles 6,7 des première et seconde parties 4,5 sont au moins sensiblement concaves avec concavité tournée vers l'intérieur et/ou présentent des dépouilles pour le démoulage ainsi que déjà indiqué. Par exemple, chaque alvéole 6,7 a, en section droite axiale une forme générale de U ou de V ou d'arc de cercle ou ellipse ou similaire, droite et ouverte vers le haut pour l'une des alvéoles -en l'occurence l'alvéole 6- et renversée et ouverte vers le bas pour l'autre alvéole -en l'occurence l'alvéole 7-

En section droite transversale (par exemple, dans le plan de jonction des bords 10,11) le moule individuel 2A peut avoir une forme générale circulaire, oblongue, triangulaire, carrée, rectangulaire, polygonale mais aussi une forme générale de couronne, dans le cas où le moule individuel 2A a une forme générale d'anneau ou de tore.

Les formes extérieures données par les alvéoles 6, 7 en combinaison peuvent être plus ou moins complexes, décoratives, ludiques, etc. Les formes générales externes des alvéoles 6,7 des première et seconde parties 4,5 sont soit similaires, de façon complémentaire, des formes internes respectives, soit enveloppent les formes internes respectives à l'extérieur en étant différentes à celles-ci. Dans le premier cas, (figures 5A à 5E), les formes générales externes des alvéoles 6,7 correspondent à leur formes internes. Dans le second cas (fig.5 G), les formes générales externes des alvéoles 6,7 ne permettent pas d'induire les formes internes ; cela permet par exemple d'avoir des formes externes fonctionnelles (présence d'un suremballage, de mention, d'étiquetage) ou décoratives.

Dans une forme de réalisation possible (fig. 2) le prolongement d'ouverture individuel 9A comporte un retour 20 situé à son ouverture d'introduction 19 et dirigé vers l'extérieur. Ce retour 20 est par exemple dans un plan au moins sensiblement perperdiculaire à l'axe 12 du prolongement d'ouverture individuel 9A et/ou parallèle au plan commun de jonction étanche des deux alvéoles 6,7 des deux parties 4,5 coopérant l'une avec l'autre.

Dans une forme de réalisation possible, le retour 20 est au moins sensiblement coplanaire avec l'ouverture supérieure 13.

Le retour 20 a également pour fonction d'assurer l'association rigide (notamment par soudage) d'un opercule 14 ayant pour fonction d'une part d'obturer l'ouverture supérieure 13 et, d'autre part, de maintenir les deux parties 4,5 du moule associées l'une à l'autre.

Selon une variante de mise en oeuvre du moule individuel 2A décrit,

Ce moule individuel 2A est perdu, l'unité 1 de matière moulable M restant, après moulage dans son moule individuel 2A, notamment pour sa manutention, stockage, présentation à la vente et vente. Dans ce cas, le moule 2A fait également fonction d'emballage final ou d'emballage primaire destiné à être combiné à un suremballage fonctionnel ou non. Egalement, en variante, le moule 2A est consommable (au sens où l'est l'unité 1) par exemple est un produit consomptible, alimentaire.

L'invention concerne, par ailleurs, un moule composé 2B, ainsi qu'il a été déjà mentionné. A l'exception notable du prolongement d'ouverture collectif 9B commun à la pluralité d'alvéoles 6 des moules individuels 2A déjà mentionnées le moule composé 2B présente les caractéristiques des moules individuels 2A déjà décrits. Pour cette raison, ces caractéristiques ne sont pas, de nouveau décrites en référence au moule composé 2B.

Les différents moules individuels 2A sont semblables ou différents, notamment de formes différentes et de même volume interne. Comme cas particulier, correspondant à une application fréquente, les différents moules individuels 2A sont tous identiques entre eux (même forme, mêmes dimensions donc même volume interne).

Le moule composé 2B se présente sous une forme générale de nappe étendue en plaque ou en bande, limitée par au moins un ou plusieurs bords externes 21.

Par exemple, dans le cas d'une nappe en forme de plaque, celle-ci est limitée par plusieurs bords 21 généralement rectilignes définissant un polygone, notamment, préférentiellement et généralement un carré ou un rectangle ou encore par un bord circulaire ou, plus généralement une courbe fermée.

Dans le cas d'une nappe en forme de bande, celle-ci est essentiellement limitée (nonobstant un bord transversal initial et un bord transversal final) par deux bords 21 latéraux généralement parallèles.

Le prolongement d'ouverture collectif 9B s'étend à partir du ou des bords externes 21 du moule composé 2B. Ainsi que cela résulte de ce qui précède, le moule composé 2B est dépourvu de tout cloisonnement interne dans le prolongement d'ouverture collectif 9B notamment entre les alvéoles 6 de la première partie 4.

Les moules individuels 2A sont préférentiellement situés à proximité immédiate les uns des autres, de manière à se jouxter. Le cas échéant, ils peuvent être écartés les uns des autres, dès lors que le passage de la matière moulable M de l'un à l'autre, ainsi qu'il a été déjà décrit, soit possible. En général, les moules individuels 2A sont rangés, par exemple, en lignes et colonnes perpendiculaires ou encore en rayons et cercles concentriques ou autre.

Le moule composé 2B comporte une ouverture supérieure 13 et/ou une ouverture inférieure 16 et/ou une ouverture d'introduction 19, respectivement pour chaque moule individuel 2A ou pour la totalité des moules individuels 2A du moule composé 2B ou pour un groupe de moules individuels 2A.

Dans une forme de réalisation préférentielle, les ouvertures supérieure 13, inférieure 16 sont pour chaque moule individuel 2A ; et l'ouverture d'introduction 19 est commune à tous les moules individuels 2A.

Egalement, le moule composé 2B comporte des moyens d'obturation 14,15 d'ouverture supérieure 13 et/ou des moyens d'obturation 17,15 d'ouverture inférieure 16, et/ou des moyens d'association rigide, respectivement pour chaque moule individuel 2A, ou par la totalité des moules individuels 2A du moule composé 2B ou pour un groupe de moules individuels 2A.

Ces caractéristiques concernant les ouvertures 13, 16, 19 et les moyens d'obturation 14,15,17 et d'association s'appliquent séparément ou en combinaison partielle ou totale.

Selon une autre caractéristique possible, le moule composé 2B est secable, notamment grâce à des lignes d'affaiblissement ou de ruptures, en moules individuels 2A ou groupes de moules individuels 2A. Par exemple, dans le cas de moules individuels 2A rangés en lignes et colonnes, les lignes d'affaiblissement ou de rupture peuvent former un réseau de deux groupes de lignes perpendiculaires entre elles séparant les lignes et les colonnes de moules individuels respectivement.

Le retour 20 s'étend à partir du ou des bords externes 21 du moule composé 2B.

De la même manière que pour les moules individuels, l'invention concerne aussi un paquet composé constitué de la pluralité d'unités 1 et d'un moule 2B.

## Revendications

1. Procédé de moulage d'une pluralité d'unités d'une matière moulable M, telle qu'une spécialité fromagère, charcutière, chocolatière, confisière, au moyen d'un moule composé (2B) comprenant une même pluralité de moules individuels en deux parties (4, 5) séparables et associables -un fond et un couvercle- chacune comprenant une alvéole (6, 7), dont les premières et les secondes parties respectivement sont associées entre elles, dans lequel on part du moule (2B) à l'état dissocié ; on introduit la matière M préalablement à l'état fluide dans le moule composé (2B) dont on fait coopérer les deux parties (4, 5) jusqu'à l'état associé avec jonction étanche ; on assure la prise en masse de la matière M dans le moule (2B) caractérisé en ce qu'on introduit la totalité d'une quantité multiple QM de matière M, correspondant à la pluralité d'unités (1) à mouler d'une part, dans la pluralité d'alvéoles (6) de la première partie (4) du moule composé (2B) et, d'autre part, dans un prolongement d'ouverture collectif commun (9B) à la pluralité d'alvéoles (6) de la première partie (4) ayant également pour fonction d'assurer l'égalisation de la quantité de matière M entre les différents moules individuels (2A) ; on fait coopérer les deux parties (4), (5) du moule composé (2B) l'une avec l'autre, de façon égale pour les différents moules individuels (2A) ; et on assure une étanchéité suffisante entre les alvéoles (7) de la seconde partie (5) du moule composé (2B) et le prolongement d'ouverture collectif (9B) de la première partie (4), propre d'une part à éviter un passage substantiel de matière M entre eux, et, d'autre part, à autoriser le passage de matière M d'un moule individuel (2A) au moule individuel (2A) voisin jusqu'à rapprochement des alvéoles (6), (7) des premières et secondes parties (4), (5) individuelles, le moulage des unités (1) étant réalisé simultanément.

2. Procédé de moulage selon la revendication 1, caractérisé en ce qu'après coopération des deux parties (4), (5) du moule composé (2B) et notamment après prise en masse, on maintient l'intégrité du moule (2B).

3. Procédé de moulage selon l'une quelconque des revendications 1 et 2, caractérisé en ce qu'après coopération des deux parties (4), (5) du moule composé (2B) -notamment après prise en masse- on procède à une ou plusieurs sections du moule composé (2B) en une pluralité de moules individuels (2A) ou des ensembles d'un ou plusieurs groupes de moules (2A).

4. Procédé de moulage selon l'une quelconque des revendications 1 à 3, caractérisé en ce qu'on obture plusieurs ouvertures supérieures (13) et/ou inférieures (16) du moule composé (2B) respectivement par un opercule unique (14), (17) et/ou au moyen d'un suremballage unique (15).

5. Procédé de moulage selon l'une quelconque des revendications 1 à 4, caractérisé en ce qu'on associe l'une avec l'autre de façon rigide la première et la seconde parties (4, 5) du moule composé (2B) notamment par soudage et/ou au moyen d'un suremballage (15).

6. Procédé de moulage selon la revendication 5, caractérisé en ce qu'on soude les deux parties (4, 5) du moule composé (2B) et/ou les deux parties (4, 5) de chaque moule individuel (2A) qui le compose.

7. Procédé de moulage selon l'une quelconque des revendications 1 à 6, caractérisé en ce qu'une fois la matière M prise en masse, on la maintient dans le moule (2B) et on fait remplir au moule (2B) également une fonction d'emballage, éventuellement le moule individuel (2B) est consommable.

8. Procédé de moulage selon l'une quelconque des revendications 1 à 7, caractérisé en ce qu'on obture l'ouverture supérieure (13) au plus tard au moins après la prise en masse ; et/ou au plus tôt après coopération avec jonction étanche de la première et de la seconde parties (4), (5) du moule individuel (2B).

9. Procédé de moulage selon l'une quelconque des revendications 1 à 8, caractérisé en ce qu'on prévoit également dans l'alvéole (6) une ouverture inférieure (16) ; et on obture préalablement une ouverture (16) par un opercule (17) associé au moule (2B) et/ou au moyen d'un suremballage (15) notamment fermé dans lequel on place le moule (2B) au moins pendant le remplissage et la prise en masse.

10. Procédé de moulage selon l'une quelconque des revendications 1 à 9, caractérisé en ce qu'on associe l'une avec l'autre de façon rigide la première et la seconde parties (4), (5) du moule, (2B) notamment par soudage et/ou au moyen d'un suremballage (15) au plus tard au moins après la prise en masse et/ou au plus tôt au moment de la coopération avec jonction étanche de la première et de la seconde parties (4), (5).

11. Moule composé pour la mise en oeuvre du procédé selon l'une quelconque des revendications 1 à 10, caractérisé par le fait qu'il comprend d'une part une pluralité de moules individuels en deux parties (4, 5) séparables et associables -un fond et un couvercle- chacune comprenant une alvéole (6), (7), ces deux alvéoles d'une part définissant, par leur coopération une enceinte de moulage (8) dont l'espace interne peut être rempli, au moins partiellement, d'une matière moulable M et, d'autre part, autorisant, après mise en masse et lorsque souhaité, le démoulage de l'unité de matière M ainsi moulée, la première partie (4) -notamment le fond- comportant un prolongement d'ouverture ; communiquant avec et prolongeant l'alvéole de la première partie (4) à partir de son bord (10) les première et seconde parties (4), (5), respectivement, étant associées rigidement entre elles et, d'autre part, un prolongement d'ouverture collectif (9B) commun à la pluralité d'alvéoles (6) de la première partie (4) du moule (2B).

12. Moule composé selon la revendication 11, caractérisé en ce qu'il se présente sous une forme générale de nappe étendue en plaque ou en bande, limitée par au moins une ou plusieurs bandes externes (21).

13. Moule composé selon l'une quelconque des revendications 11, 12, caractérisé en ce que le prolongement d'ouverture collectif (9B) s'étend à partir du ou des bords externes (21) du moule composé (2B).

14. Moule composé selon l'une quelconque des revendications 11 à 13, caractérisé en ce qu'il est dépourvu de tout cloisonnement interne dans le prolongement d'ouverture collectif (9B), notamment entre les alvéoles (6) de la première partie (4).

15. Moule composé selon l'une quelconque des revendications 11 à 14, caractérisé en ce qu'il comporte une ouverture supérieure (13) et/ou une ouverture inférieure (16), et/ou une ouverture d'introduction (19), respectivement, pour chaque moule individuel (2A) ou pour la totalité des moules individuels (2A) du moule composé (2B) ou pour un groupe de moules individuels (2A).

16. Moule composé selon l'une quelconque des revendications 11 à 15, caractérisé en ce qu'il comporte des moyens d'obturation (14), (15) d'ouverture supérieure (13) et/ou des moyens d'obturation (17), (15) d'ouverture inférieure (16) et/ou des moyens d'association rigide, respectivement pour chaque moule individuel (2A) ou pour la totalité des moules individuels (2A), du moule composé (2B) ou pour un groupe de moules individuels (2A).

17. Moule composé selon l'une quelconque des revendications 11 à 16, caractérisé en ce que les différents moules individuels (2A) sont semblables ou différents, notamment de formes différentes et de même volume interne.

18. Moule composé selon l'une quelconque des revendications 11 à 17, caractérisé en ce qu'il est sécable, notamment grâce à des lignes d'affaiblissement ou de ruptures, en moules individuels (2A) ou groupes de moules individuels (2A).

19. Moule composé selon l'une quelconque des revendications 11 à 18, caractérisé en ce que le retour (20) s'étend à partir du ou des bords externes (21) du moule composé.

**Patentansprüche**

1. Verfahren zum Formen einer Vielzahl von Einheiten aus einem formbaren Material (M), wie z.B. einer Käse-, Wurst-, Schokoladen-, Süßwarenzubereitung, mittels einer zusammengesetzten Form (2 B) mit einer gleichen Vielzahl einzelner Formen aus zwei voneinander lösbaren und wiederverbindbaren Teilen (4,5) - einem Boden und einem Deckel - , wobei jedes Teil eine Kammer (6,7) aufweist und wobei jeweils die ersten und die zweiten Teile untereinander verbunden sind, bei welchem Verfahren von der getrennten Form (2 B) ausgegangen wird, zuerst die Masse (M) inr flüssigem Zustand in die zusammengesetzte Form (2 B) eingefüllt wird, von der die beiden Teile (4,5) zusammenwirken, bis sie miteinander verbunden sind und dicht schließen, und für das Erstarren des Materials (M) in der Form (2 B) gesorgt wird, **dadurch gekennzeichnet**, daß die Gesamtheit einer vielfachen Menge (QM) an Material (M) entsprechend der Vielzahl der zu formenden Einheiten (1) zum einen in die Vielzahl der Kammern (6) des ersten Teils (4) der zusammengesetzten Form (2 B) und zum anderen in eine der Vielzahl der Kammern (6) des ersten Teils (4) gemeinsame Öffnungsverlängerung (9 B) eingebracht wird, deren Funktion die Sicherstellung der gleichmäßigen Verteilung der Menge des Materials (M) zwischen den verschiedenen einzelnen Formen (2A) ist, daß die beiden Teile (4),(5) der zusammengesetzten Form (2 B) auf eine für die verschiedenen einzelnen Formen (2A) gleiche Weise miteinander zusammenwirken, daß zwischen den Kammern (7) des zweiten Teils (5) der zusammengesetzten Form (2 B) und der gemeinsamen Öffnungserweiterung (9 B) des ersten Teils (4) eine ausreichende Dichtheit sichergestellt wird, die geeignet ist, zum einen einen wesentlichen Durchtritt an Material (M) zwischen ihnen zu verhindern und zum anderen den Durchtritt des Materials (M) von einer einzelnen Form (2A) zur benachbarten einzelnen Form (2A) bis zum Zusammenführen der Kammern (6),(7) der ersten und zweiten einzelnen Teile (4),(5) zu erlauben, und daß die Formung der Einheiten (1) gleichzeitig erfolgt.

2. Verfahren nach Anspruch 1, dadurch gekennzeichnet, daß nach dem Zusammenwirken der beiden Teile (4),(5) der zusammengesetzten Form (2 B) und insbesondere nach dem Erstarren des Materials die Unversehrtheit der Form (2 B) erhalten bleibt.

3. Verfahren nach Anspruch 1 oder 2, dadurch gekennzeichnet, daß nach dem Zusammenwirken der beiden Teile (4),(5) der zusammengesetzten Form (2 B) - insbesondere nach dem Erstarren des Materials - mit einem oder mehreren beschnitten der zusammengesetzten Form (2 B) in Form von mehreren einzelnen Formen (2A) oder von Einheiten aus einer oder mehreren Gruppen von Formen (2A) weiter verfahren wird.

4. Verfahren nach einem der Ansprüche 1 bis 3, dadurch gekennzeichnet, daß mehrere obere Öffnungen (13) und/oder untere Öffnungen (16) der zusammengesetzten Form (2 B) jeweils mit einem einzelnen Deckel (14),(17) und/oder mittels einer einzigen äußeren Umhüllung (15) verschlossen werden.

5. Verfahren nach einem der Ansprüche 1 bis 4, dadurch gekennzeichnet, daß die ersten und die zweiten Teile (4),(5) der zusammengesetzten Form (2 B), insbesondere durch Verschweißen und/oder mit Hilfe einer äußeren Umhüllung (15) miteinander starr verbunden werden.

6. Verfahren nach Anspruch 5, dadurch gekennzeichnet, daß man die beiden Teile (4),(5) der zusammengesetzten Form (2 B) und/oder die beiden Teile (4),(5) jeder einzelnen Form (2A), aus denen sie sich zusammensetzt, miteinander verschweißt werden.

7. Verfahren nach einem der Ansprüche 1 bis 6, dadurch gekennzeichnet, daß das einmal erstarrte Material (M) in der Form (2 B) belassen wird und die Form (2 B) gleichzeitig die Aufgabe einer Verpackung erfüllt, z.B. indem die einzelne Form (2A) zum Verzehr geeignet ist.

8. Verfahren nach einem der Ansprüche 1 bis 7, dadurch gekennzeichnet, daß die obere Öffnung (13) spätestens nach dem Erstarren und/oder frühestens nach dem Zusammenwirken der ersten und der zweiten Teile (4),(5) der einzelnen Form (2A) unter Bildung einer dichten Verbindung verschlossen wird.

9. Verfahren nach einem der Ansprüche 1 bis 8, dadurch gekennzeichnet, daß gleichzeitig in der Kammer (6) eine untere Öffnung (16) vorgesehen wird und daß eine Öffnung (16) zuerst mit einem mit der Form (2 B) verbundenen Deckel (17) und/oder mit Hilfe einer im wesentlichen geschlossenen äußeren Umhüllung (15), in die man die Form (2 B) zumindest während des Einfüllens und Erstarrens hineingestellt wird, verschlossen wird.

10. Verfahren nach einem der Ansprüche 1 bis 9, dadurch gekennzeichnet, daß die ersten und die zweiten Teile (4),(5) der Form (2 B), insbesondere durch Schweißen und/oder mit Hilfe einer äußeren Umhüllung (15), spätestens nach dem Erstarren und-/oder frühestens im Moment des Zusammenwirkens der ersten und der zweiten Teile (4),(5) unter Ausbildung einer dichten Verbindung miteinander starr verbunden werden.

11. Zusammengesetzte Form zur Durchführung des Verfahrens nach einem der Ansprüche 1 bis 10, dadurch gekennzeichnet, daß sie zum einen eine Vielzahl einzelner Formen aus zwei voneinander lösbaren und miteinander verbindbaren Teilen (4),(5) - einem Boden und einem Deckel - enthält, daß jedes Teil mit einer Kammer (6),(7) versehen ist, wobei diese beiden Kammern zum einen durch ihr Zusammenwirken das Äußere der Gießform (8) definieren und ihre Innenräume mindestens teilweise mit einem formbaren Material (M) füllbar sind und zum anderen nach dem Erstarren auf Wunsch das Entfernen der so geformten Einheit aus dem Material (M) aus der Form erlauben, daß der erste Teil (4) - insbesondere der Boden - eine verlängerte Öffnung besitzt, die mit der Kammer des ersten Teils (4) in Verbindung steht und diese von ihrer Kante (10) aus verlängert, daß jeweils die ersten und die zweiten Teile (4),(5) untereinander starr verbunden sind und daß die zusammengesetzte Form zum anderen eine gemeinsame Öffnungsverlängerung (9B) besitzt, die der Vielzahl der Kammern (6) des ersten Teils (4) der Form (2B) gemeinsam ist.

12. Zusammengesetzte Form nach Anspruch 11, dadurch gekennzeichnet, daß sie eine im wesentlichen große flächige Form nach Art einer Platte oder eines Bandes besitzt, die durch mindestens eine oder mehrere Außenkanten (21) begrenzt ist.

13. Zusammengesetzte Form nach Anspruch 11 oder 12, dadurch gekennzeichnet, daß sich die gemeinsame Öffnungsverlängerung (9B) von der oder den Außenkanten (21) der zusammengesetzten Form (2B) ausgehend erstreckt.

14. Zusammengesetzte Form nach einem der Ansprüche 11 bis 13, dadurch gekennzeichnet, daß sie in der gemeinsamen Öffnungsverlängerung (9B), insbesondere zwischen den Kammern (6) des ersten Teils (4), keine Trennwände besitzt.

15. Zusammengesetzte Form nach einem der Ansprüche 11 bis 14, dadurch gekennzeichnet, daß sie jeweils eine obere Öffnung (13) und/oder eine untere Öffnung (16) und/oder eine Einfüllöffnung (19) für jede einzelne Form (2A) oder für die Gesamtheit der einzelnen Formen (2A) der zusammengesetzten Form (2B) oder für eine Gruppe einzelner Formen (2A) besitzt.

16. Zusammengesetzte Form nach einem der Ansprüche 11 bis 15, dadurch gekennzeichnet, daß sie Mittel (14),(15) zum Verschließen der oberen Öffnung (13) und/oder Mittel (17),(15) zum Verschließen der unteren Öffnung (16) und/oder jeweils Mittel für die starre Verbindung jeder einzelnen Form (2A) oder der Gesamtheit der einzelnen Formen (2A) der zusammengesetzten Form (2B) oder einer Gruppe von einzelnen Formen (2A) besitzt.

17. Zusammengesetzte Form nach einem der Ansprüche 11 bis 16, dadurch gekennzeichnet, daß die verschiedenen einzelnen Formen (2A) gleichartig oder verschieden sind, insbesondere verschiedene Formen und gleiches Innenvolumen besitzen.

18. Zusammengesetzte Form nach einem der Ansprüche 11 bis 17, dadurch gekennzeichnet, daß sie in einzelne Formen (2A) oder Gruppen von einzelnen Formen (2A), insbesondere aufgrund von Schwächungs- oder Sollbruchlinien, teilbar ist.

19. Zusammengesetzte Form nach einem der Ansprüche 11 bis 18, dadurch gekennzeichnet, daß sich von dem oder den Außenkanten (21) der zusammengesetzten Form aus ein Rücksprung (20) erstreckt.

## Claims

1. A method of molding a plurality of units of moldable material M such as a speciality cheese, meat product, chocolate, or confectionary by means of a composite mold (2B) comprising the same plurality of individual molds in two separable and interconnectable portions (4, 5) constituting a bottom and a lid, each individual mold comprising a cell (6, 7) whose respective first and second portions are associated together, wherein the method begins with the mold (2B) in the dissociated state; the material M previously put into the fluid state is inserted into the composite mold (2B) whose two portions (4, 5) are caused to co-operate to take up the associated state with a sealed join; and the material M is caused to set in the mold (2B), the method being characterized in that all of a multiple quantity QM of the material M that corresponds to the plurality of units (1) to be molded is inserted firstly in the plurality of cells (6) in the first portion (4) of the composite mold (2B), and secondly in a collective opening extension (9B) common to the plurality of cells (6) of the first portion (4) which also has the function of equalizing the quantity of material M between the various individual molds (2A); the two portions (4, 5) of the composite mold (2B) are caused to co-operate with each other in uniform manner for the various individual molds (2A); and sufficient sealing is ensured between the cells (7) of the second portion (5) of the composite mold (2B) and the collective opening extension (9B) of the first portion (4), firstly to avoid any significant quantity of material M passing therebetween, and secondly to allow material M to pass from one individual mold (2A) to an adjacent individual mold (2A) until the cells (6, 7)of the individual first and second portions (4, 5) have moved close together, with the units (1) being molded simultaneously.

2. A molding method according to claim 1, characterized in that integrity of the mold (2B) is maintained after the two portions (4, 5) of the composite mold (2B) are in co-operation, and in particular after setting.

3. A molding method according to claim 1 or 2, characterized in that after the two portions (4, 5) of the composite mold (2B) are in co-operation, and in particular after setting, the composite mold (2B) is cut up one or more times into a plurality of individual molds (2A) or into sets of one or more groups of molds (2A).

4. A molding method according to any one of claims 1 to 3, characterized in that a plurality of top (13) and/or bottom (16) openings of the composite mold (2B) are closed by a respective single cover (14, 17) and/or by means of single outer wrapping (15).

5. A molding method according to any one of claims 1 to 4, characterized in that the first and second portions (4, 5) of the composite mold (2B) are rigidly associated with each other, in particular by welding and/or by means of an outer wrapping (15).

6. A molding method according to claim 5, characterized in that the two portions (4, 5) of the composite mold (2B) and/or the two portions (4, 5) of each individual mold (2A) making it up are welded together.

7. A molding method according to any one of claims 1 to 6, characterized in that once the material M has set, it is maintained in the mold (2B), and the mold (2B) is also made to perform a packaging function, with the individual molds (2B) optionally being edible.

8. A molding method according to any one of claims 1 to 7, characterized in that the top opening (13) is closed at least not later than after setting; and/or not earlier than the moment of co-operation with sealed connection between the first and second portions (4, 5) of the individual mold (2B).

9. A molding method according to any one of claims 1 to 8, characterized in that a bottom opening (16) is also provided in the cell (6); and an opening (16) is prior closed by a cover (17) associated with the mold (2B) and/or by means of outer wrapping (15) in particular closed wrapping, in which the mold (2B) is placed, at least during filling and setting.

10. A molding method according to any one of claims 1 to 9, characterized in that the first and second portions (4, 5) of the mold (2B) are rigidly associated with each other in particular by welding and/or by means of outer wrapping (15) at least not later than after setting and/or not earlier than the moment of co-operation with sealed connection between the first and second portions (4, 5).

11. A composite mold for implementing the method according to any one of claims 1 to 10, characterized by the fact that it comprises:

firstly a plurality of individual molds made up of two separable and associable portions (4, 5), namely a bottom and a lid, each individual mold comprising a cell (6, 7), these two cells firstly, by co-operating with each other, defining a molding enclosure (8) whose inside space can be filled, at least in part, with a moldable material M, and secondly, after setting and when so desired, enabling the unit of material M molded in this manner to be unmolded, the first portion (4), in particular the bottom, including an extension of its opening which communicates with and which extends the cell of the first portion (4) from its edge (10), the first and second portions (4, 5) respectively being rigidly associated together; and

secondly a collective opening extension (9B) common to the plurality of cells (6) of the first portion (4) of the mold (2B).

12. A composite mold according to claim 11, characterized in that its general form is that of an extended sheet constituting a plate or a strip which is delimited by at least one or several outer strips (21).

13. A composite mold according to claim 11 or 12, characterized in that the collective opening extension (9B) extends from the outer edges (21) of the composite mold (2B).

14. A composite mold according to any one of claims 11 to 13, characterized in that it has no internal partitioning in the collective opening extension (9B), and in particular between the cells (6) of the first portion (4).

15. A composite mold according to any one of claims 11 to 14, characterized in that it includes a top opening (13) and/or a bottom opening (16), and/or an insertion opening (19), respectively for each individual mold (2A) or for all of the individual molds (2A) of the composite mold (2B) or for a group of individual molds (2A).

16. A composite mold according to any one of claims 11 to 15, characterized in that it includes closure means (14, 15) for the top opening (13) and/or closure means (17, 15) for the bottom opening (16), and/or rigid association means, respectively for each individual mold (2A) or for all of the individual molds (2A) of the composite mold (2B), or for a group of individual molds (2A).

17. A composite mold according to any one of claims 11 to 16, characterized in that the various individual molds (2A) are similar or different, in particular having different shapes and the same inside volume.

18. A composite mold according to any one of claims 11 to 17, characterized in that it is suitable for being split into individual molds (2A) or groups of individual molds (2A), in particular by means of break lines or lines of weakness.

19. A composite mold according to any one of claims 11 to 18, characterized in that the return (20) extends from the external edge(s) (21) of the composite mold.

FIG.1A

FIG.1B

FIG.1C

FIG.1D

FIG.1E

FIG.2

FIG.3

FIG. 4

FIG.5A

FIG.5B

FIG.5C

FIG.5D

FIG.5E

FIG.5F

FIG.5G

FIG.8

FIG.6

FIG.7A

FIG.7B